## Europäisches Patentamt
## European Patent Office
## Office européen des brevets

(19)

(11) Veröffentlichungsnummer: **0 147 793**
**B1**

(12)

# EUROPÄISCHE PATENTSCHRIFT

(45) Veröffentlichungstag der Patentschrift:
**31.05.89**

(51) Int. Cl.⁴: **B 60 B  17/00,** B 23 K  31/04

(21) Anmeldenummer: **84115885.0**

(22) Anmeldetag: **20.12.84**

(54) **Verfahren zur Herstellung von Schienenrädern (Eisenbahnrädern).**

(30) Priorität: **03.01.84  SE 8400020**

(43) Veröffentlichungstag der Anmeldung:
**10.07.85 Patentblatt 85/28**

(45) Bekanntmachung des Hinweises auf die Patenterteilung:
**31.05.89 Patentblatt 89/22**

(84) Benannte Vertragsstaaten:
**DE FR GB**

(56) Entgegenhaltungen:
**DE-B-1 152 127**
**FR-A-2 164 462**
**FR-A-2 343 612**
**FR-A-2 413 982**
**GB-A-718 013**
**US-A-2 030 243**

(73) Patentinhaber: **ASEA AB, S-721 83 Västeras (SE)**

(72) Erfinder: **Hassellöf, Ake, Stationsvägen 1, S-735 00 Surahammar (SE)**
Erfinder: **Lenasson, Carl- Gustaf, Dipl.- Ing., Bangatan 7, S-735 00 Surahammar (SE)**
Erfinder: **Nordhall, Lennart, Fotbollsvägen 34, S-735 00 Surahammer (SE)**

(74) Vertreter: **Boecker, Joachim, Dr.- Ing., Rathenauplatz 2-8, D-6000 Frankfurt a.M. 1 (DE)**

EP 0 147 793 B1

**Beschreibung**

Die vorliegende Erfindung betrifft ein Verfahren zur Herstellung von Schienenrädern (Eisenbahnrädern) gemäß dem Oberbegriff des Anspruches 1.

Bei Eisenbahnrädern ist es erwünscht, auf der zur Lauffläche gerichteten Seite des Radflansches eine Schicht zu haben, die verschleißfester als das Grundmaterial ist und einen kleinen Reibungskoeffizient mit der Schiene hat. Alternativ oder gleichzeitig ist es erwünscht, auf der Lauffläche eine Schicht zu haben, die verschleißfester als das Grundmaterial ist und die mit der Schiene einen großen Reibungskoeffizient hat, was für den Betrieb sehr vorteilhaft ist.

Als Materialbeispiel kann für die Schicht am Radflansch kann hochkohlenstoffhaltiger martensitischer Stahl und für die Schicht auf der Lauffläche ein martensitischer Stahl mit einem Kohlenstoffgehalt von ca. 0,05 % genannt werden.

Der Erfindung liegt die Aufgabe zugrunde, ein Verfahren zu entwickeln, durch welches ein Schienenrad der vorgenannten Art in einer für die Großproduktion geeigneten einfachen und zweckmäßigen Weise hergestellt werden kann.

Zur Lösung dieser Aufgabe wird ein Verfahren gemäß dem Oberbegriff des Anspruches 1 vorgeschlagen, welches erfindungsgemäß die im kennzeichnenden Teil des Anspruches 1 genannten Merkmale hat.

Eine vorteilhafte Ausgestaltung des Verfahren nach der Erfindung ist in dem Unteranspruch genannt.

Durch das Verfahren gemäß der Erfindung erhält man einen Radrohling, der unter Erreichung einer guten Bindung zwischen den Teilrohlingen leicht warmbearbeitet (zum Beispiel gesintert, geschmiedet und/oder gewalzt) und zu einem fertigen Produkt weiterbearbeitet (zum Beispiel durch Drehen) werden kann.

Anhand der Figuren soll die Erfindung näher erläutert werden:

Figur 1     ein nach der Erfindung hergestelltes Eisenbahnrad,

Figur 2     eine Rohlingsanordnung für ein Eisenbahnrad in einem bestimmten Stadium während des Verfahren nach der Erfindung.

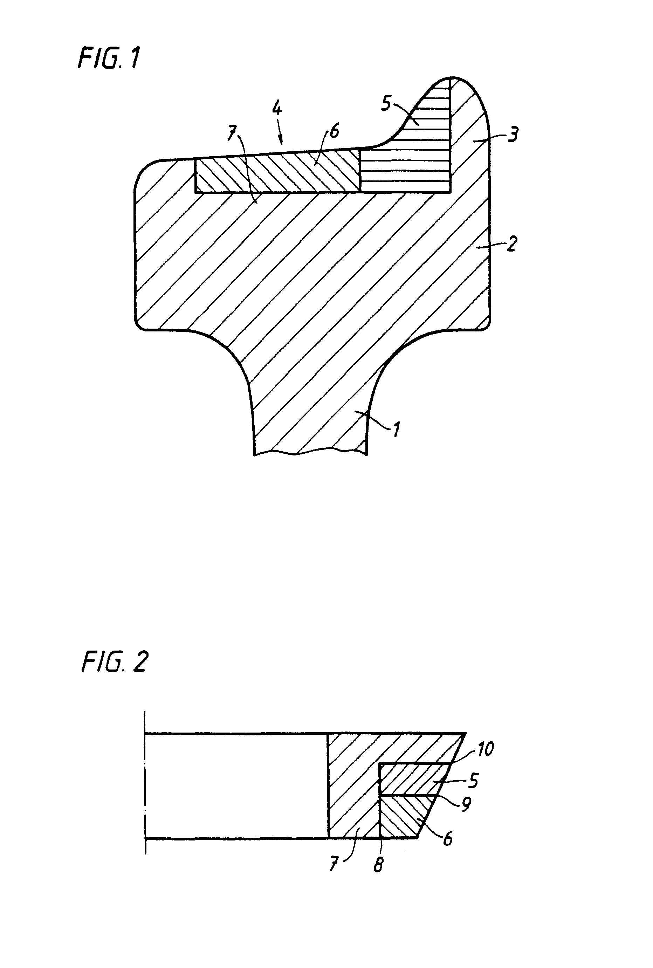

Figur 1 zeigt ein Vollrad für ein Eisenbahnfahrzeug. Das Verfahren nach der Erfindung kann jedoch auch bei zusammengesetzten Rädern angewendet werden, bei denen der Radkranz 2 einerseits und die Radscheibe 1 mit der Nabe andererseits nicht aus einem Stück bestehen, sondern der aus einem anderen Material bestehende Radkranz auf den zentralen Teil des Rades aufgebracht (zum Beispiel aufgeschrumpft) wird. In Figur 1 ist der Radflansch mit 3 und die Lauffläche mit 4 bezeichnet. An der zur Lauffläche gerichteten Seite des Radflansches ist ein Schichtabschnitt 5 aus einem Material mit höherer Verschleißfestigkeit und niedrigerem Reibungskoeffizient als das Grundmaterial 7 vorgesehen. Neben dem Schichtabschnitt 5 oder anstelle des Schichtabschnitts 5 kann an der Lauffläche 4 ein Schichtabschnitt 6 vorgesehen werden, dessen Material einen größeren Reibungskoeffizienten mit der Schiene hat als das Grundmaterial des Rades. Auf diese Weise erhält man bessere Betriebseigenschaften für das Schienenrad. Für die Schichtabschnitte geeignete Materialien sind oben beispielsweise angeführt worden.

Die Herstellung des Schienenrades kann gemäß der Erfindung folgendermaßen geschehen: Es werden zunächst Teilrohlinge hergestellt, von denen einer die Form eines Radkranzes (oder Vollrades) hat, der aus dem Grundmaterial 7 besteht, sowie zwei Rohlinge (5, 6), die aus Materialien bestehen, die für den Flanschabschnitt 5 und den Laufflächenabschnitt 6 bestimmt sind. Die genannten Teilrohlinge werden so geformt, daß sie aneinander passen, wie dies Figur 2 zeigt. Die exakte Paßform kann durch Dreharbeiten an den Rohlingen hergestellt werden. Ferner werden die Rohlinge von Oxyden und organischen Verunreinigungen gesäubert. Dann werden die Rohlinge in der in Figur 2 gezeigten Art zusammengefügt und anschließend längs der äußeren Fugen 8, 9 und 10 zusammengeschweißt, beispielsweise durch Elektronenstrahlschweißung, wobei zweckmäßigerweise im Vakuum oder unter Schutzgas gearbeitet wird. Es soll ein Lufteintritt in die Spalträume der aneinander grenzenden Rohlingsschichten verhindert werden.

Nach dem Schweißen wird der Gesamtrohling erhitzt und so geschmiedet und gewalzt, daß der Rohling eine ordentliche Warmbearbeitung (Warmverformung) erfährt. Nach dieser Warmbearbeitung ist zwischen den verschiedenen Materialien eine gute metallische Bindung eingetreten.

Anschließend wird der Rohling in der gewohnten Weise zum fertigen Produkt weiterverarbeitet, beispielsweise durch Drehen und anschließende Feinbearbeitung.

Das vorstehend beschriebene Verfahren kann im Rahmen des offenbarten allgemeinen Erfindungsgedanken in vielfacher Weise variiert werden. So kann die Dicke der Teilrohlinge für die Schichtabschnitte 5 und 6 in unterschiedlicher Weise variieren, um eine ausreichende Dicke für die fertigen verschleißfesten Schichtabschnitte für den Flansch bzw. für die Lauffläche zu erhalten.

**Patentansprüche**

1. Verfahren zur Herstellung von Schienenrädern (Eisenbahnrädern) oder Radkränzen für solche Räder, bestehend aus einem Grundmaterial, einem verschleißfesteren Schichtabschnitt an dem zur Lauffläche gerichteten Teil des Radflansches und/oder einen Schichtabschnitt an der Lauffläche, die einen großen und möglichst wetterunabhängigen Reibungskoeffizienten mit der Schiene hat,

dadurch gekennzeichnet,

daß aus dem Grundmaterial (7) und aus den Materialien für die genannten Schichtabschnitte (5, 6) je ein Teilrohling hergestellt wird, welche eine solche Form haben, daß sie aneinanderpassen, daß die Teilrohlinge nach einer Dreh- oder anderen Bearbeitung und nach ihrer Reinigung von Oxyden und anderen Verunreinigungen zusammengefügt werden und an den Außenflächen derart zusammengeschweißt werden, daß ein Lufteintritt zwischen die Teilrohlinge verhindert wird, und daß der zusammengesetzte Radrohling durch Warmbearbeitung in seine endgültige oder nahezu endgültige Form mit einer guten metallischen Bindung zwischen den Teilrohlingen weiterverarbeitet wird.

2. Verfahren nach Anspruch 1
dadurch gekennzeichnet,
daß das Schweißen im Vakuum oder unter Schutzgas, beispielsweise durch Elektronenstrahlschweißung, erfolgt.

## Claims

1. Method for manufacturing wheels for rails (railway-wheels) or wheel rims for such wheels, consisting of a base material, a wear-resistant layer portion on that part of the wheel flange facing towards the tread and/or a layer portion on the tread which gives a large and possibly weather-independent coefficient of friction between the wheel and the rail,

characterized

in that one sub-blank each is formed from the base material (7) and the materials for said layer portions (5, 6), which sub-blanks have such a shape as to fit to each other, that the sub-blanks, after a turning or other operation and after removal of oxides and other impurities, are assembled together and welded together on their outer surfaces in such a way that access of air between the blanks is prevented, and that the composite wheel blank is transformed by hot-working into its final or almost final shape with a good metal bond between the sub-blanks.

2. Method according to claim 1
characterized
in that the welding is performed in a vacuum or in an atmosphere of protective gas, for example by electron beam welding.

## Revendications

1. Procédé de fabrication de roues pour rails (roues de chemins de fer) ou de jantes pour de telles roues, constituées par un matériau de base, par une section de couche, plus résistante à l'usure sur la partie du boudin de roue, qui est dirigée vers la surface de roulement et/ou par une section de couche de la surface de roulement qui possède, avec le rail, un coefficient de friction important et, autant que possible, indépendant des intempéries, caractérisé par le fait que l'on fabrique avec le matériau de base (7) et avec les matériaux pour lesdites sections de couche (5, 6) des ébauches partielles respectives qui possèdent une forme telle qu'elles s'adaptent entre elles, que les ébauches partielles sont, après un usinage au tour ou après un autre genre de façonnage et après leur nettoyage pour l'enlèvement des oxydes et autres impuretés, assemblées et soudées entre elles au niveau des surfaces extérieures de façon à empêcher l'entrée de l'air entre les ebauches partielles, et que l'ébauche de roue assemblée est soumise à un post-façonnage thermique pour être amenée à sa forme définitive ou quasi définitive, avec une bonne liaison métallique entre les ébauches partielles.

2. Procédé selon la revendication 1, caractérisé par le fait que la soudure est opérée sous vide ou sous un gaz de protection, par exemple par soudage par bombardement électronique.

FIG. 1

FIG. 2